# EUROPEAN PATENT SPECIFICATION

(11) **EP 0 292 573 B1**
(45) Date of publication and mention of the grant of the patent: **24.08.1994**
(21) Application number: 88900096.4
(22) Date of filing: 11.12.1987
(51) Int. Cl.: G05B 19/23

(54) **SPEED CONTROLLER**
GESCHWINDIGKEITSREGELANORDNUNG
REGULATEUR DE VITESSE

(30) Priority: 12.12.1986 JP 2963/86
(43) Date of publication of application: 30.11.1988
(73) Proprietor: FANUC LTD., Minamitsuru-gun, Yamanashi 401-05 (JP)
(72) Inventor: KURAKAKE, Mitsuo, Hino-shi, Tokyo 191 (JP); SAKAMOTO, Keiji, Hachioji-shi, Tokyo 192 (JP)
(74) Representative: Billington, Lawrence Emlyn
(86) International application number: PCT/JP87/00966
(87) International publication number: WO 88/04493

(56) References cited:
- DE-A- 2 934 775
- JP-A- 6 148 011
- PATENT ABSTRACTS OF JAPAN vol. 6, no. 82 (P-116)(960) 20 May 1982,& JP-A-57 19804 (OKI) 02 February 1982,

## Description

This invention relates to a velocity control apparatus for controlling the velocity of a servomotor based on a velocity signal fed back from the servomotor.

Servomotors for NC machine tools, robots and the like often employ a control method which relies more upon a digital servo system, in which digital processing is executed based on digital commands, than upon an analog system.

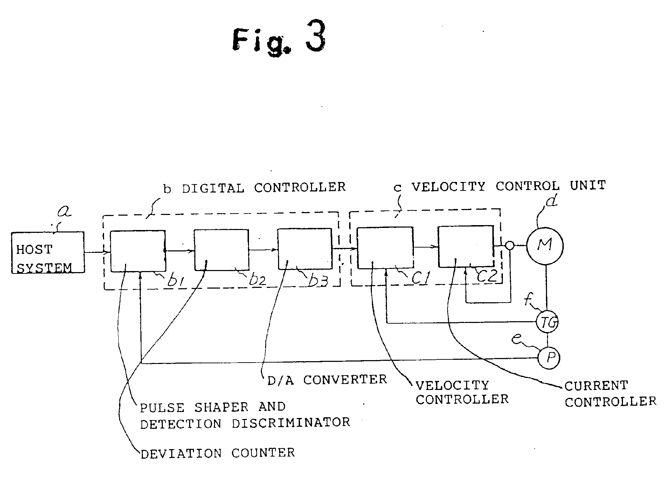

Fig. 3 is a block diagram illustrating an example in which a servomotor is controlled by such a digital servo. A command signal formed by a host system a such as a computer is applied to a digital controller b. The digital controller b is constituted by a pulse shaper and direction discriminating circuit b1, a deviation counter b2, and a D/A converter b3. A position signal detected by a pulse coder e mounted on a servomotor d is fed back to the digital controller b so that a deviation signal between the position signal and the command signal may be formed. The deviation signal is converted into an analog signal by the D/A converter b3, and the analog signal is delivered to a velocity control unit c. The velocity control unit c is constituted by a velocity controller cl and a current controller c2. The velocity controller c1 obtains a deviation signal by comparing a velocity signal fed back from a tachogenerator f with the velocity command in the form of the analog value, and applies the deviation signal to the current controller c2 as a current command. The current controller c2 receives current feedback from the servomotor and, by comparing this current with the current command obtained by the velocity controller c1, forms a drive signal for the servomotor d.

In general, therefore, the velocity control unit c includes a velocity control loop and a current control loop composed of analog circuitry which performs processing to produce the servomotor control signal. With the recent popularization of 16-bit microcomputers, however, digital servo systems have been developed in which all processing for such velocity control and current control is performed digitally.

The reason for the latter is that many advantages are obtained in terms of control precision, system cost and the like when the servo control system, inclusive of the velocity control loop and current control loop, is composed entirely of digital circuitry. However, the computer that forms such a software servo is required to store parameters for servo system gain adjustment, velocity loop compensation and the like in a memory and is also required to carry out various processing control with regard to the processing of feedback data such as velocity signals and position signals after sampling, at a prescribed period, information actually generated by a signal detecting mechanism such as the pulse coder. Accordingly, a problem that arises is a delay in such signal processing even if a 16-bit microprocessor having a high processing capability is used. The reason is that when the abovementioned data are sampled at a predetermined sampling period so as to accommodate the processing performed by the microprocessor, a lag element that results when the data are accepted within the computer as velocity information causes an inaccuracy in servomotor control.

The present invention has been devised to solve the aforementioned problem and its object is to provide a velocity control apparatus capable of reducing lag due to the sampling of velocity information necessary for controlling the velocity of a servomotor.

According to the present invention there is provided a velocity control apparatus comprising a velocity control unit for controlling the velocity of a servomotor, the apparatus being operable to produce discrete velocity information from a feedback pulse signal indicative of the position of the servomotor and further comprising: sampling means for receiving the feedback pulses produced during successive sampling periods stipulated by a processing period of said velocity information; counting means connected to said sampling means for counting the feedback pulses produced during each sub-period equal to the sampling period divided by an integer n; and memory means connected to the output of said counting means for storing the count values for the n most recent sub-periods, the data in the memory means being updated at the end of every sub-period by storing the count value for that sub-period and discarding the count value for the oldest sub-period; wherein said velocity control unit is operable to request velocity information once during each sampling period, and in response to the request an arithmetic means of the apparatus adds the pulse counts for the n most recent sub-periods as stored in the memory means, and supplies the result of the addition as said requested velocity information to said velocity control unit.

Accordingly, the velocity control apparatus of the present invention obtains a servomotor position signal from a detector such as a pulse coder and detects discrete count data. When information is digitally outputted to a velocity control loop as well as to a position control loop, a plurality of the latest items of count data corresponding to the sampling time are treated as velocity information.

This servomotor velocity control apparatus which implements the velocity control loop using digital signals is capable of using count data corresponding to the latest sampling time by counting pulses within a length of time equivalent to the sampling period divided by an integer. As a result, velocity information free of a time delay can be obtained in order to realize more accurate velocity control.

### Brief Description of the Drawings

Figs. 1(a), (b) are block diagrams illustrating the general construction of a servomotor velocity control apparatus to which the present invention is applied, Fig. 2 is a characteristic diagram for describing the actions of the foregoing embodiment, and Fig. 3 is a block diagram illustrating an example of a conventional apparatus.

An embodiment of the present invention will now be described in detail with reference to the drawings.

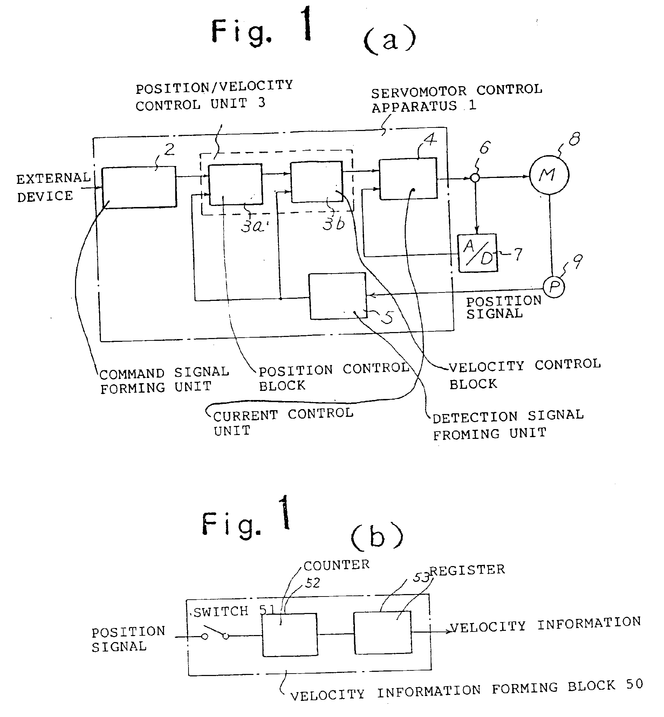

Fig. 1 shows block diagrams illustrating the general construction of a servomotor velocity control apparatus to which the present invention is applied.

A servomotor velocity control apparatus 1 is constituted by, e.g., a microprocessor and is provided with a command signal forming unit 2, a position/velocity control unit 3, a current control unit 4 and a detection signal forming unit 5. Each of these control units is constructed by suitably arranging a CPU, a memory, a parallel I/O, a bus line and the like. The current of a servomotor 8 is subjected to current control loop processing by converting an analog value detected by a detector 6 into a digital value by means of an A/D converter 7, after which the digital value is inputted to the current control unit 4 as a current feedback signal. A pulse signal obtained by a detector 9 such as a pulse coder mounted on the servomotor 8 is inputted to the detection signal forming unit 5. The detection signal forming unit 5 respectively delivers a position signal and velocity signal as discrete count data to a position control block 3a and a velocity control block 3b of the position/velocity control unit 3, whereby a position control loop and velocity control loop are formed.

A velocity information forming block 50 of the kind shown in Fig. 1(b) is provided within the detection signal forming unit 5. A software switch 51, a counter 52 and a register 53 are disposed in the velocity signal forming block, from which velocity information is read out at a time interval set by the switch 51. Sampled pulses are outputted to the position control block 3a as a position signal and supplied to the counter 52. These pulses are counted in synchronization with a predetermined sampling period T and subdivided into a number of pulses fed back in units of time of, for example, (T/4), namely one-fourth the sampling period. This output of the counter is delivered to the register 53. After the counted value is stored in the register 53 for a predetermined processing time T, the counted value is cleared by successively updating plural items of count data to the most recent.

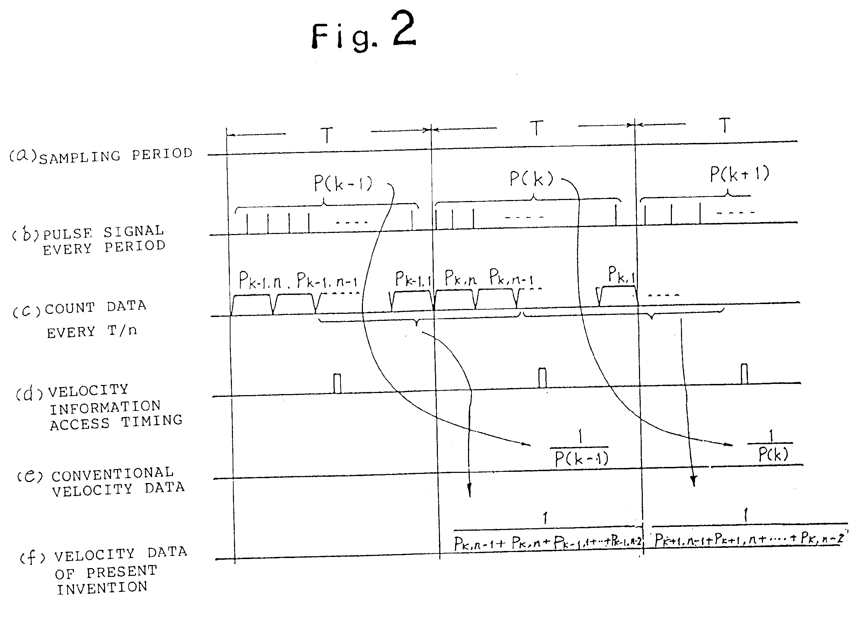

The number of pulses is counted in synchronization with the sampling time T every time (T/n) obtained by dividing the sampling time T by an integer (n), and torque information successively outputted to the current control unit 4 is processed in the velocity control block 3b. At such time, velocity information is obtained based on n items of count data corresponding to the latest sampling time. This processing is carried out as shown in Fig. 2.

The operation of the foregoing embodiment will now be described with reference to the characteristic view of Fig. 2 while being compared with the conventional method.
(a) indicates the sampling period T, which is stipulated by the processor, for sampling the pulse signal obtained by the pulse coder 9 provided on the servomotor 8.
(b) indicates the number of pulses P(k-1), P(k), P(k+1)... obtained in each sampling period (where k is an integer).
(c) indicates the number of pulses Pj (where j is an integer less than n), which is synchronized to the sampling period, every 1/n of the sampling period (where n is any integer).
(d) indicates access timing from the computer side with regard to detected velocity information. In the prior art, all pulses in one sampling period stipulated by the processing performed in the velocity control block 3b are counted, after which the results of the count are outputted. Accordingly, these results are accessed by the velocity control block 3b at the predetermined timing of the next period, so that the signal from the pulse coder 9 is processed as information delayed in time by a maximum of (T+T/2).
(e) indicates velocity, which is decided by the number of pulses counted within the sampling time T, obtained as velocity information proportional to 1/P(k-1), 1/P(k), 1/P(k+1), respectively.
(f) When velocity control processing is carried out by referring to the number of pulses stored in the register 53, (f) indicates adding and using plural items of count data corresponding to the latest sampling time T at that instant. Consequently, a time delay at signal processing performed every sampling time is reduced.

Depending upon count data V1 counted in the latest sampling period from the pulse signal of the pulse coder, as described above, it is possible to perform suitable weighting processing with regard to count data V2 stored in the register 53. That is, if velocity is slow, for example, accurate velocity control can be carried out by obtaining velocity information as [(V1+V2)/2].

The velocity control apparatus of the present invention is used in order to accept feedback data, which is necessary for velocity control of a servomotor or the like, in the form of discrete data from a pulse coder or the like, and form a prescribed control command by digitally processing the data in a microprocessor.

## Claims

1. A velocity control apparatus comprising a velocity control unit (3b) for controlling the velocity of a servomotor, the apparatus being operable to produce discrete velocity information from a feedback pulse signal indicative of the position of the servomotor and further comprising:
sampling means (51) for receiving the feedback pulses produced during successive sampling periods (T) stipulated by a processing period of said velocity information;
counting means (52) connected to said sampling means (51) for counting the feedback pulses produced during each sub-period equal to the sampling period divided by an integer n; and
memory means (53) connected to the output of said counting means (52) for storing the count values for the n most recent sub-periods, the data in the memory means (53) being updated at the end of every sub-period by storing the count value for that sub-period and discarding the count value for the oldest sub-period;
wherein said velocity control unit (3b) is operable to request velocity information once during each sampling period, and in response to the request an arithmetic means of the apparatus adds the pulse counts for the n most recent sub-periods as stored in the memory means (53), and supplies the result of the addition as said requested velocity information to said velocity control unit (3b).

2. A velocity control apparatus according to claim 1, wherein said arithmetic means is operable to weight count data counted in the latest sampling period and count data from said memory means and process these data as velocity information.

3. A velocity control apparatus according to claim 1 or 2, wherein the pulse signal fed back from said servomotor is processed in a microprocessor forming a software servo system.

4. A velocity control apparatus according to claim 1, 2 or 3, wherein the pulse signal fed back from said servomotor is counted in a period which is one-fourth of the sampling period (T) of said sampling means (51), whereby discrete velocity information is formed.

## Patentansprüche

1. Geschwindigkeitssteuervorrichtung mit einer Geschwindigkeitssteuereinheit (3b) zum Steuern der Geschwindigkeit eines Servomotors, wobei die Vorrichtung eine diskrete Geschwindigkeitsinformation von einem Rückführimpulssignal, das die Position des Servomotors bezeichnet, erzeugen kann, und die weiter aufweist:
Abtastmittel (51) zum Empfang der Rückführimpulse, die während aufeinanderfolgender Abtastperioden (T) erzeugt wurden, die durch eine Verarbeitungsperiode der Geschwindigkeitsinformation festgesetzt wurden;
Zählmittel (52), die mit den Abtastmitteln (51) verbunden sind, um die Rückführimpulse zu zählen, die während jeder Subperiode erzeugt werden, die gleich der Abtastperiode geteilt durch eine ganze Zahl n sind; und
Speichermittel (53), die mit dem Ausgang der Zählmittel (52) verbunden sind, um die Zählwerte für die allerletzten n Subperioden zu speichern, wobei die Daten in den Speichermitteln (53) am Ende jeder Subperiode durch Speichern des Zählwertes für diese Subperiode und durch Abwerfen des Zählwerts für die älteste Subperiode aktualisiert werden;
wobei die Geschwindigkeitssteuereinheit (3b) eine Geschwindigkeitsinformation einmal während jeder Abtastperiode anfordern kann, und abhängig von der Anforderung Rechenmittel der Vorrichtung die Impulsbeträge für die n allerletzten Subperioden zählen, wie sie in den Speichermitteln (53) gespeichert sind, und das Ergebnis der Addition als die angeforderte Geschwindigkeitsinformation der Geschwindigkeitssteuereinheit (3b) zuleitet.

2. Geschwindigkeitssteuervorrichtung nach Anspruch 1, wobei die Rechenmittel die Zähldaten, die in der letzten Abtastperiode gezählt wurden, und Zähldaten aus den Speichermitteln wichten, und diese Daten als Geschwindigkeitsinformation verarbeiten.

3. Geschwindigkeitssteuervorrichtung nach Anspruch 1 oder 2, wobei das Impulssignal, das vom Servomotor zurückgeführt wurde, in einem Mikroprozessor verarbeitet wird, der ein Software-Servosystem bildet.

4. Geschwindigkeitssteuervorrichtung nach Anspruch 1, 2 oder 3, wobei das Impulssignal, das vom Servomotor zurückgeführt wurde, in einer Periode gezählt wird, die ein Viertel der Abtastperiode (T) der Abtastmittel (51) beträgt, wodurch eine diskrete Geschwindigkeitsinformation gebildet wird.

## Revendications

1. Un appareil de régulation de vitesse comprenant une unité de commande de vitesse (3b) pour réguler la vitesse d'un servomoteur, l'appareil étant actionné pour produire des informations discrètes de vitesse à partir d'un signal impulsionnel de rétroaction indiquant la position du servomoteur et comprenant en outre :
- des moyens d'échantillonnage (51) pour recevoir les impulsions de rétroaction produites pendant des périodes d'échantillonnages successives (T) stipulées par une période de traitement desdites informations de vitesses ;
- des moyens de comptage (52) reliés auxdits moyens d'échantillonnage (51) pour compter les impulsions de rétroaction produites pendant chaque sous période égale à la période d'échantillonnage divisée par un nombre entier n ; et
- des moyens à mémoire (53) reliés à la sortie desdits moyens de comptage (52) pour stocker les valeurs de comptage pendant les n sous périodes les plus récentes, les données dans les moyens à mémoire (53) étant mises à jour à la fin de chaque sous période en stockant la valeur de comptage pour cette sous période et en négligeant la valeur de comptage pour la sous période la plus ancienne ;
dans lequel ladite unité de commande de vitesse (3b) est actionnée pour demander des informations de vitesse une fois pendant chaque période d'échantillonnage et, en réponse à la demande, un moyen arithmétique de l'appareil ajoute les valeurs de comptage pour les n sous périodes les plus récentes stockées dans les moyens à mémoire (53), et fournit le résultat de l'addition en tant que ladite information de vitesse demandée à ladite unité de commande de vitesse (3b).

2. Un appareil de régulation de vitesse selon la revendication 1, dans lequel lesdits moyens arithmétiques sont actionnés pour pondérer des données de comptage comptées dans la dernière période d'échantillonnage et des données de comptage provenant desdits moyens à mémoire et traiter ces données en tant qu'informations de vitesse.

3. Un appareil de régulation de vitesse selon la revendication 1 ou 2, dans lequel le signal impulsionnel provenant par rétroaction dudit servomoteur est traité dans un microprocesseur formant un système d'asservissement à logiciel.

4. Un appareil de régulation de vitesse selon la revendication 1, 2 ou 3, dans lequel le signal impulsionnel provenant par rétroaction dudit servomoteur est compté dans une période qui est un quart de la période d'échantillonnage (T) desdits moyens d'échantillonnage (51), de manière à former des informations discrètes de vitesse.
